# EUROPEAN PATENT SPECIFICATION

(11) **EP 1 872 976 B1**
(45) Date of publication and mention of the grant of the patent: **14.10.2009**
(21) Application number: 06116060.2
(22) Date of filing: 26.06.2006
(51) Int. Cl.: B60C 11/12, B29D 30/06

(54) **Tire with sipes of defined curvature**
Luftreifen mit Feineinschnitten einer bestimmten Krümmung
Pneumatique avec des incisions ayant une courvature définie

(43) Date of publication of application: 02.01.2008
(73) Proprietor: The Goodyear Tire & Rubber Company, Akron, OH 44316-0001 (US)
(72) Inventor: Van Nguyen, Gia, F-08110 Blagny (FR); Cambron, Anne-France, L-4735 Petange (LU)
(74) Representative: Kutsch, Bernd

(56) References cited:
- WO-A-20/05123420
- DATABASE WPI Week 199045 Derwent Publications Ltd., London, GB; AN 1990-340028 XP002408926 & JP 02 246810 A (BRIDGESTONE TIRE KK) 2 October 1990 (1990-10-02)
- DATABASE WPI Week 200454 Derwent Publications Ltd., London, GB; AN 2004-557357 XP002408927 & JP 2004 210043 A (BRIDGESTONE CORP) 29 July 2004 (2004-07-29)

## Description

### Field of the Invention

The present invention is directed to the tread of a tire and sipes in the tire tread, and also to a mold blade to make such sipes, of the type disclosed by JP-A-02-246810.

### Background of the Invention

The tread portion of a pneumatic tire generally comprises a plurality of circumferentially and laterally extending grooves defining ground engaging tread elements, the elements being in the form of blocks or ribs or combinations thereof. The particular size and shape of the tread elements contribute significantly to the overall performance of the tire and are for that reason designed to achieve the desired tire characteristics.

In addition to the grooves provided in the tread configuration, a tire tread is often provided with sipes. A sipe is a groove having a width in the range of 0.1 % to 1% of the tread width, i.e. the arc length of the tread surface in the axial direction. The sipe tends to close when it is located in the tire footprint at zero speed and under normal load and pressure. Sipes are typically formed by steel blades inserted into a cast or machined mold or tread ring.

A sipe may extend circumferentially or laterally about the tread and may be as deep as the primary tread grooves or have a depth that is greater than the groove depth. The sipes can pass through the sides of the ribs and tread blocks or be confined to the interior of the tread elements. It is further known to use sipes having a depth that varies along its length.

The presence of sipes in a tread increases the number of biting edges in the tread. The local high pressure at each biting edge improves the wiping and digging action of the tread surface, conferring to a tire excellent traction on wet roads and on snow and ice. Furthermore, sipes improve the flexibility of the tread elements without destroying their solidity. The easy relative longitudinal sliding between the opposed faces of the sipe weakens the resistance of the tread elements to flexing in the contact area between tread and road and therefor slows down the heat buildup of the tire; however, the sliding of the opposed faces of the sipes creates friction between the opposing sipe faces and can lead to wear of the sipes.

However, the need for flexibility of the tread element can change during the life of the tire and the present invention is directed to a tire and tire tread with a sipe that addresses such a changing need.

### Summary of the Invention

The present invention is directed to a tire tread having ground engaging elements having sipes therein. The invention also discloses a tire having sipes therein and a blade used to form the sipes.

Disclosed herein is a tire according to claim 1.

In one aspect of the invention, the sipe configuration is such that, in a vertical plane, along the sipe length, from a length midpoint of the sipe to the respective sipe end points, the sipe configuration is also defined by an increasing radius Y.

In another aspect of the invention, the tread element comprising the sipe has opposing edges, and the sipe end points coincide with the tread element opposing edges such that the sipe extends across the full width of the tread element. Alternatively, the sipe may be a blind sipe such that at least one of the sipe end points is located within the tread element and does not intersect with any tread element edge. If both sipe ends are located within the tread element, the sipe is considered a fully embedded sipe.

In another aspect of the invention, the sipe has a radially inner portion of at least 10% but not more than the radially innermost 45% of the sipe depth Dₛ and the radially inner portion has a configuration defined by a radius R having a value of infinity.

In another aspect of the invention, a theoretical line can be drawn between opposing sipe end points and the theoretical line and the sipe base are in the same vertical plane. Alternatively, the theoretical line and the sipe base may be in axially offset vertical planes.

In another aspect of the invention, at the sipe end points, the sipe has a straight line vertical configuration.

Also disclosed is a blade that forms the disclosed sipe. The blade has a portion that is the positive to the negative space that the sipe forms in the tread element. The blade thus has a shape creating portion that has opposing end points, a length as measured between the opposing end points, and a depth. In planes perpendicular to the blade depth, the configuration of a radially outer portion of the blade is defined by a continuous non-linear curvature, the curvature having at least one radius R, the value of the radius R increasing from a top of the blade to a base of the blade, the blade base having a configuration defined by a radius of infinity.

### Definitions

The following definitions are controlling for the disclosed invention.

"Axial" and "axially" are used herein to refer to lines or directions that are parallel to the axis of rotation of a tire.

"Blade" is typically a small width element used to create a protrusion in a tire curing mold that forms part of the tread design. The protrusion forms a corresponding depression in the finished tire tread. Conventionally, a blade is distinct from a rib in a tire curing mold. A rib in a mold is also a protrusion; however, a rib forms a groove in the finished tread, while blades are used to form sipes.

"Radial" and "radially" are used to mean directions radially toward or away from the axis of rotation of the tire.

"Sipes" refer to small grooves molded into tread elements of a tire that subdivide the tread elements and improve traction characteristics. Sipes have a width in the range of 0.1 % to 1% of the tread width and tend to close completely in a tire footprint. The depth of a sipe may vary around the circumference of the tread, or the depth of one sipe may be constant but vary from the depth of another sipe in the tire.

### Brief Description of the Drawings

The invention will be described by way of example and with reference to the accompanying drawings in which:
FIG. 1 illustrates a tread element with a sipe therein;
FIGS. 2A-2D are sectional cuts along the length of the tread element sipe;
FIG. 2E is an alternative sipe configuration;
FIG. 3 is a top view of a tread element with the sipe therein;
FIG. 4 is a top view of the tread element at approximately 25% wear;
FIG. 5 is a top view of the tread element at approximately 50% wear; and
FIGS. 6-9 illustrate alternative sipe configurations.

### Detailed Description of the Invention

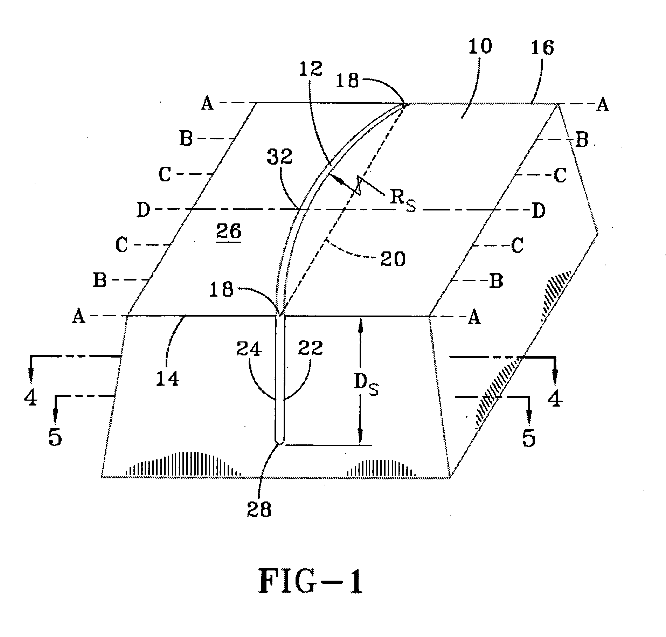

FIG. 1 illustrates a tread element 10 having a sipe 12 in accordance with the present invention. The tread element 10 is a tread feature on a tire, preferably on a pneumatic tire. In a manner known to those skilled in the art, the tread element 10 is formed from any combination of lateral and/or circumferential grooves. While the tread element 10 is illustrated as an individual tread block, those skilled in the art will appreciate that this tread element 10 may have any overall configuration desired by the tire designer. The element 10 may be defined as having both a length or width along any horizontal plane and a depth along the vertical, or radial, plane of the tread element and associated tire. Additionally, features of the tread element 10, such as the sipe 12, may be similarly defined as having a length or width along horizontal planes and a depth along vertical or radial planes.

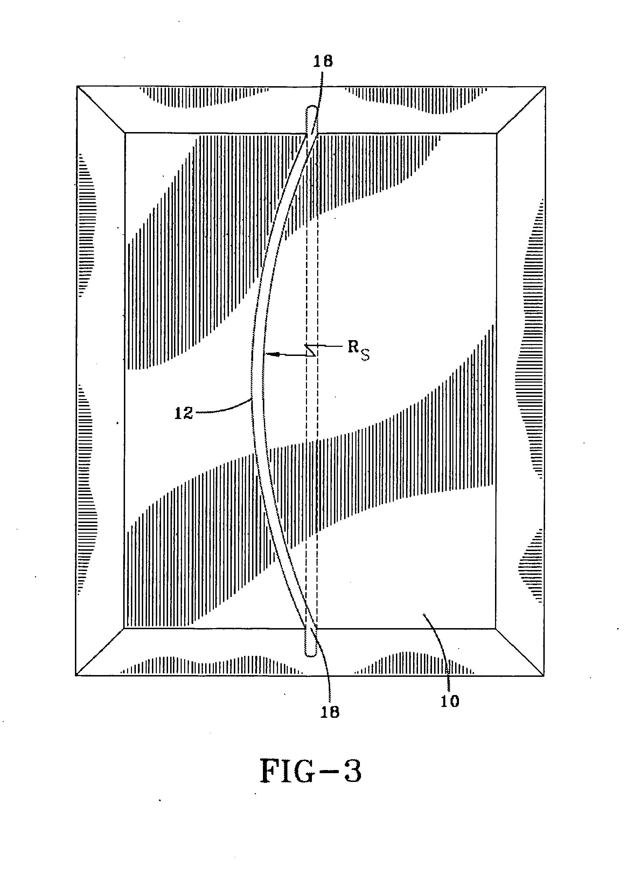

The illustrated sipe 12 extends from one tread element edge 14 to the opposing tread element edge 16, wherein the opposing sipe end points 18 are located on the same hypothetical line 20 drawn the length of the sipe 12. Between the sipe end points 18, in a plane parallel to the tread surface 26, the centerline of the sipe 12, which is located halfway between the opposing surface walls 22, 24 of the sipe 12, has a configuration defined by an arc of a circle having a defined radius R, this being the radius Rₛ at the initial tread surface 26, see also FIG. 3. The initial tread surface 26, defining the original tread element height and sipe depth Dₛ, is determined when the tire is new and has not been subjected to any significant tire wear.

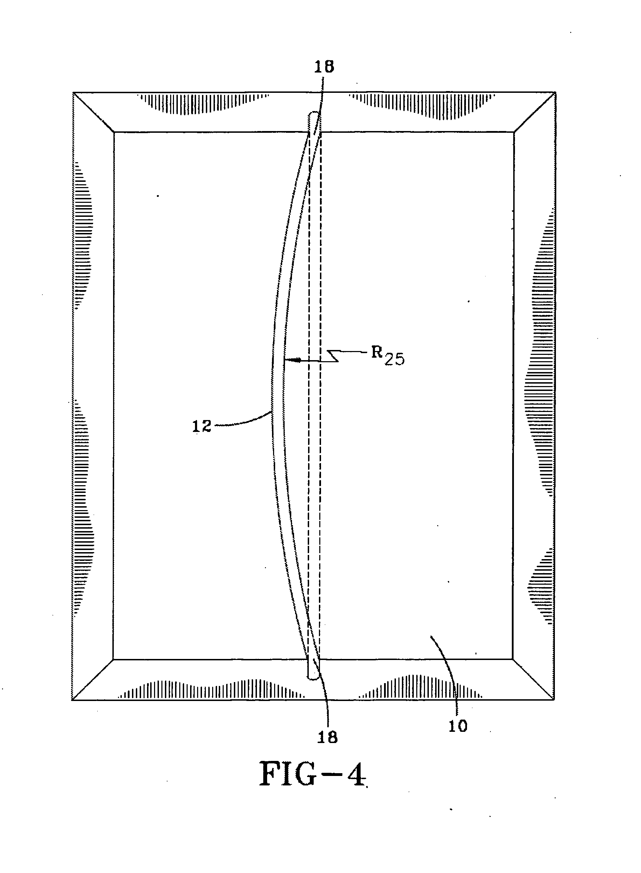

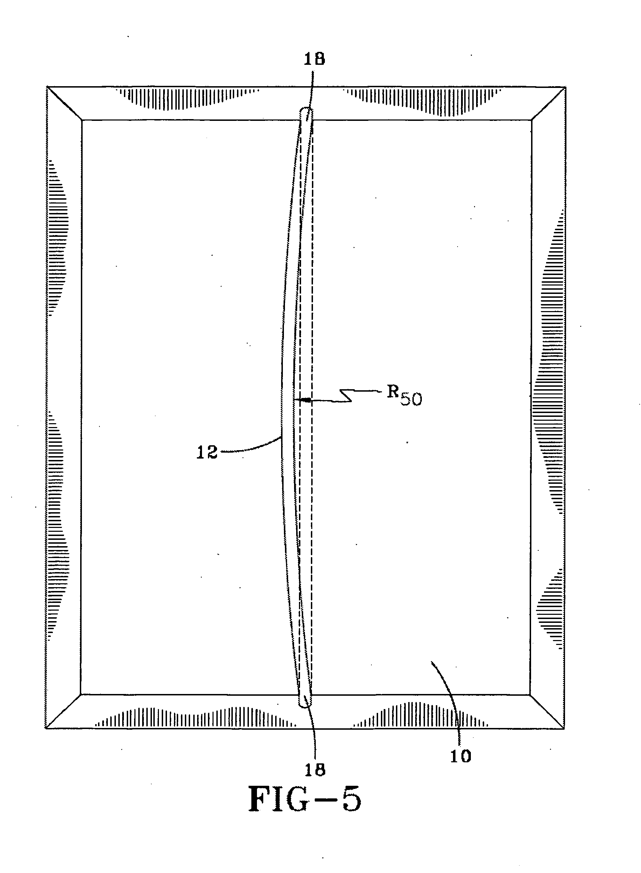

As the tread surface is worn and the sipe depth decreases, the radius R of the arc of the sipe 12, as measured in a plane parallel to the tread surface, gradually increases while the end points 18 of the sipe 12 remain constant, see FIGS. 4 and 5. FIG. 4 illustrates the tread element after approximately 25% wear of the tread element 10, the level of wear based on the original sipe depth Dₛ. The sipe centerline has a radius R₂₅; R₂₅ being greater than Rₛ. FIG. 5 illustrates the tread element after approximately 50% wear of the tread element 10, the level of wear based on the original sipe depth Dₛ. The sipe centerline has a radius R₅₀; R₅₀ being greater than R₂₅. For the curved portion of the sipe, as measured in a horizontal plane parallel to the tread surface, at each depth of the sipe, the radius is constant along the arc configuration of the sipe.

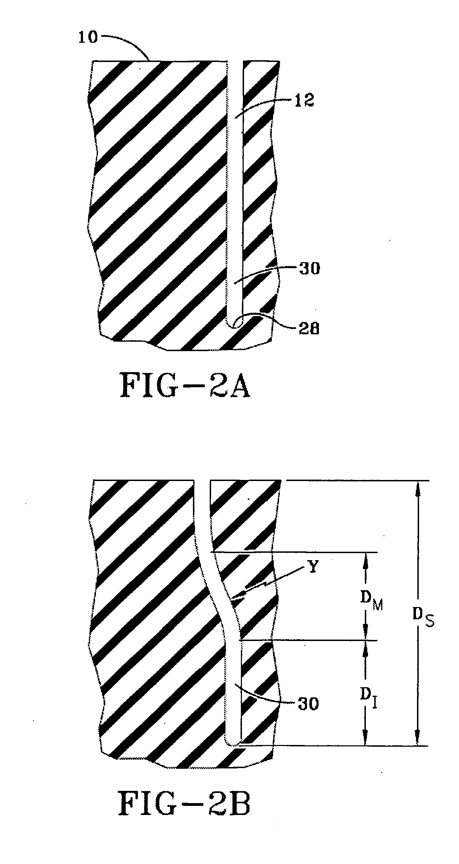

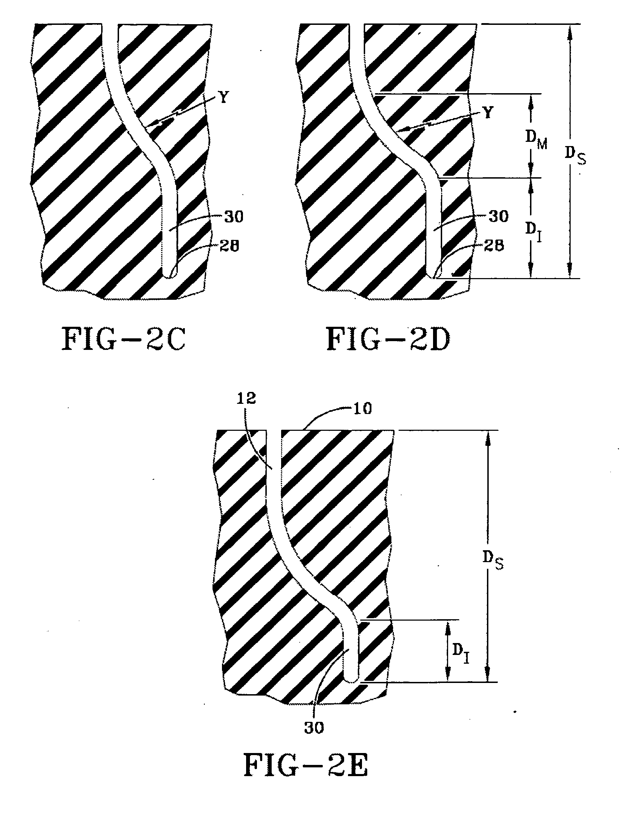

The radially inner portion 30 of the sipe 12 has a length of D, corresponding to at least 10% but not more than the innermost 45%, more preferably not more than the innermost 30%, most preferably not more than the innermost 25%, of the sipe depth Dₛ, see FIGS. 2B-2D. The radially innermost portion 30 of the sipe 12 has a radius R of infinity so the base 28 of the sipe 12 has a straight configuration. Preferably, the straight line configuration of the sipe base 28 is in the same vertical plane as the theoretical line 20 drawn between the sipe end points 18. When the sipe base 28 is aligned with line 20, at the sipe edges 18, when viewed in a radial plane perpendicular to the tread element surface 26, the sipe 12 has a straight vertical presentation, see FIG. 2A; the sipe edge 18 may be slightly tapered due to a inclination of the tread element sidewall. Thus, along the depth of the sipe 12, when viewed from radially above the tread surface, the sipe 12 gradually progresses from a highly curved configuration to a constant configuration.

FIGS. 2A-2D illustrate the cross-sectional cuts of the tread element 10 along the various line of A-A, B-B, C-C, D-D. Along section line D-D, the sipe 12 has mirror symmetry. As already mentioned, at the sipe end points 18, as seen in FIGS. 1 and 2A, in a radial plane of the tire, the sipe has a straight vertical configuration. Along the length of the sipe, as determined parallel to line 20 between the sipe ends 18, from the sipe edge 18 to the mid-point 32 of the sipe length (at the section line D-D for the illustrated sipe), the vertical configuration of the sipe has a varying curved configuration. As seen in FIGS 2B-2D, the 20-30% of the sipe depth radially outward and adjacent to the radially inner portion 30 of the sipe 12 has a curvature of Y having a length D_{M} that gradually decreases as it approaches the sipe length mid-point 32. Thus, irrespective of the increasing radius R of the sipe in the horizontal plane of the sipe 12 and tread element 10, in the vertical plane (or radial plane of the tire) of the sipe 12, along the sipe length, the sipe 12 has an decreasing and then increasing curvature from one sipe end to the opposing sipe end.

The sipe 12 of FIG. 2E illustrates a cross-sectional view of a variation of sipe 12 at the mid-point 32 of the sipe length; it is at the same cross-sectional location as the view of FIG. 2D. In this sipe, the radially inner portion 30 has a length of D, of approximately 25%.

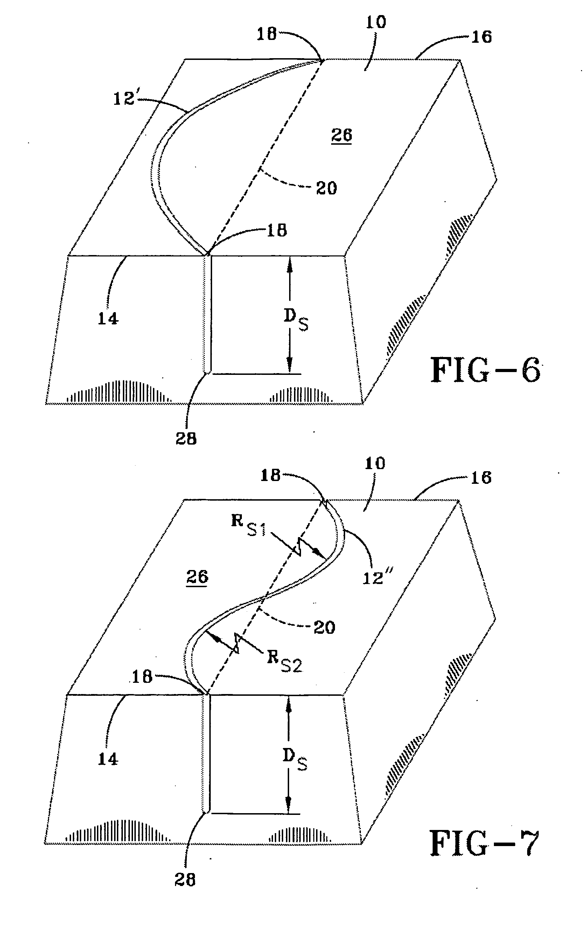

Additionally, variations in the curvature of the radius, as seen in the plane parallel to the tread surface, are also within the scope of the present invention, so long as the curvature radius is decreasing with wear and flows into the straight sipe base as described above. A few embodiments of variations in the curvature are shown in FIGS. 6 and 7. For the illustrated sipe of FIG. 6, the sipe 12' has a parabolic curvature, while the sipe 12" has a double curvature defined by two radii, R_{S1} ,R_{S2}. The two radii R_{S1}, R_{S2} defining the curvature in the plane parallel to the tread surface preferably are equal to one another, but one radius may be greater than the other. The sipe curvature may include more than two curves, such as three curves, wherein the sipe centerline begins to resemble a zig-zag pattern.

The technical benefits of the invention sipe configuration are as follows. When the tread depth is relatively high, as with a new tread, the tread element has a high degree of flexibility. To stiffen the tread using tread features, a curved, three dimensional sipe will create a locking effect. The use of a three dimensional sipe also permits a stiffening of the blade used to manufacture the sipe; especially in instances wherein the sipe is fully embedded in the tread element, i.e. a blind sipe. As the tread wears, the need for stiffening of the tread via tread features gradually reduces as the shorter tread element in and of itself because stiffer due to the reduced element height. Thus, the need for a stiffening effect created by a three dimensional sipe is also reduced. In the present invention, at the tread surface, the sipe 12 has a greater three dimensional aspect which gradually reduces as the need for tread stiffening features is also gradually reduced. When the need is significantly less, the sipe 12 has only a two-dimensional configuration, with no stiffening effect, thus no longer providing increased tread element stiffness, but still providing desired traction features by the presence of the sipe itself.

The blade used in manufacturing the sipe of the present invention has a significant portion of the blade having a shape corresponding to the sipe, and is in essence, the positive of the blank, or negative, space that is the formed sipe such that the same language that describes the sipe also describes the blade that forms the sipe. The blade is defined as opposing end points that defines the length of the blade and a depth. In planes perpendicular to the depth of the blade, the radially outer portion of the blade has a non-linear curvature, the curvature having at least one radius R, the value of the radius R gradually increasing along the depth of the blade to a blade base having a radius R having a value of infinity. Preferably, not more than the 45% of the bottom most portion of the blade has a radius R of infinity.

To create the sipes 12, 12' of FIGS 1 and 6, in the vertical plane, the blade has a mirror symmetry about the mid-length of the blade of a decreasing radius from the blade edges.

The blade is made of metal, preferably steel, and for molding the sipe 12, is mounted into a tread mold such that the straight bottom portion of the blade projects into the open space of the mold. Those skilled in the art will readily understand the appropriate method of mounting and using a sipe blade in a tire mold.

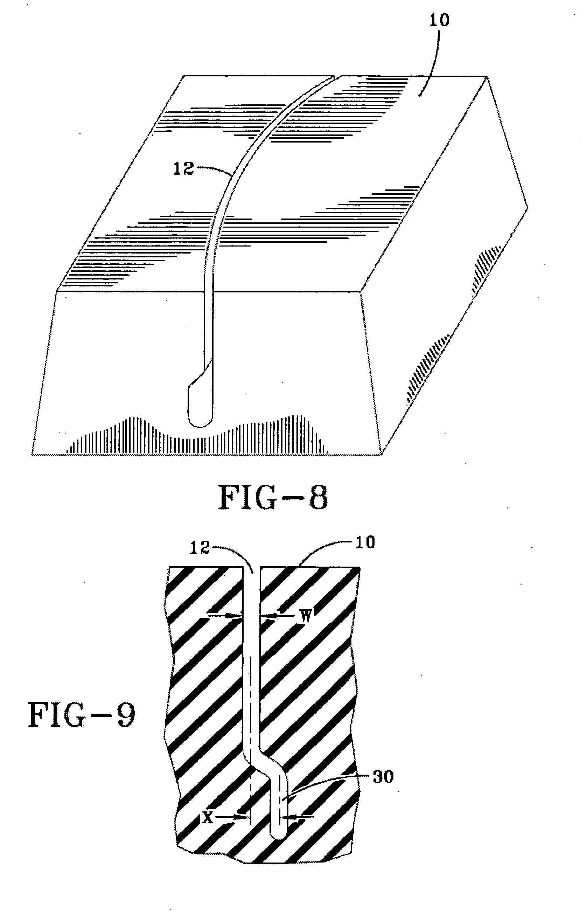

FIGS. 8 and 9 illustrate variations of the inventive sipe and tire tread.

In FIG. 8, the radially innermost portion 30 of the sipe 12 has an increased width in comparison to the radially outermost portion of the sipe 12. The increased width portion provides for multiple benefits. By providing an increased width portion, it reduces potential friction contact in the lower portion of the sipe as the tread element passes through the contact patch during tire rotation.

As previously discussed, the straight configuration of the radially inner portion 30 of the sipe 12 is preferably in the same vertical plane as the theoretical line 20 connecting the sipe end points 18 of the radially outermost portion of the sipe. Conversely, the sipe base 28 may be displaced from the vertical plane coincident with the theoretical line 20. In such an embodiment, the sipe 12 has a configuration as shown in FIG. 9. The sipe base 28 is axially displaced from the radially outer portion of the sipe 12. The amount of displacement, x, measured along the sipe centerline, is not more than five times the width w of the sipe 12.

Additionally, while the sipes are illustrated as extending between the tread element edges 14, 16, to achieve tread characteristics, the sipe may have at least one end 18 located within the tread element and not corresponding to either tread element edge 14 or 16. Such a sipe is often referred to as a "blind" sipe. Alternatively, both sipe ends 18 may be completely embedded with the tread element 10 such that the sipe edges 18 do not intersect the tread element edges 14, 16; i.e. an embedded sipe. In regards to placement of the sipe 12 in a tread element 10 in regards to the circumferential direction of the tire, the sipe 12 may be oriented in any direction desired by the tire designer.

## Claims

1. A tire having a tire tread, the tread having a tread surface (26) and a plurality of ground engaging tread elements (10), whereby at least one of the elements has a sipe (12), the sipe having opposing end points (18), a sipe length as measured between the opposing end points, and a radial depth (D_{S}), the tire being **characterized by**:
in a plurality of planes parallel to the tread surface (26), the configuration of a radially outer portion of the sipe (12) is defined by a continuous non-linear curvature, the curvature having at least one radius (R), the value of said radius (R) increasing from the tread surface (26) to a base (28) of the sipe (12), and the base of the sipe (12) has a configuration defined by a radius having a value of infinity.

2. The tire of claim 1, wherein in a vertical plane, along the sipe length, from a length midpoint (32) of the sipe (12) to the respective sipe end points (18), the sipe (12) configuration is defined by an increasing radius (Y).

3. The tire of claim 1 or claim 2, wherein the sipe (12) has a radially inner portion (30) of at least 10% but not more than the radially innermost 45% of the sipe depth (D_{S}) and the radially inner portion (30) has a configuration defined by a radius having a value of infinity.

4. The tire of at least one of the previous claims, wherein a theoretical line (20) can be drawn between opposing sipe end points (18) and the line (20) and the sipe base (28) are in the same vertical plane.

5. The tire of at least one of the previous claims, wherein the tread element (26) has opposing edges (14, 16), and the at least one sipe end point coincides with one of the tread element opposing edges.

6. A blade for mounting inside a tire mold to form a sipe in a tire tread, the blade having opposing end points, a length as measured between the opposing end points, and a depth, the blade being **characterized by**:
in a plurality of planes perpendicular to the blade depth, the configuration of a radially outer portion of the blade is defined by a continuous non-linear curvature, the curvature having at least one radius (R), the value of said radius increasing from a top of the blade to a base of the blade, the blade base having a configuration defined by a radius of infinity.

7. The mold blade of claim 6, wherein in a vertical plane, along the blade length, from a length midpoint of the blade to the respective blade end points, the blade configuration is defined by an increasing radius.

8. The mold blade of either claim 6 or 7, wherein at least 10% but not more than 45% of a bottommost portion of the blade has a radius of infinity.

9. The mold blade of at least one of the previous claims, wherein a theoretical line can be drawn between opposing blade end points and the line and the blade base are in the same vertical plane.

10. The mold blade of at least one of the previous claims, wherein at the blade end points, the blade has a straight line configuration when viewed in a plane parallel to the depth of the blade.

## Patentansprüche

1. Reifen mit einer Reifenlauffläche, wobei die Lauffläche eine Profiloberfläche (26) und eine Vielzahl von am Boden angreifenden Profilelementen (10) aufweist, wobei mindestens eines der Elemente einen Feineinschnitt (12) aufweist, wobei der Feineinschnitt entgegengesetzte Endpunkte (18), eine zwischen den entgegengesetzten Endpunkten gemessene Feineinschnittlänge und eine radiale Tiefe (D_{S}) aufweist, wobei der Reifen **dadurch gekennzeichnet ist, dass**:
in einer Vielzahl von Ebenen parallel zur Profiloberfläche (26), die Konfiguration eines radial äußeren Teils des Feineinschnitts (12) durch eine kontinuierliche nichtlineare Krümmung definiert ist, wobei die Krümmung mindestens einen Radius (R) hat, wobei der Wert des Radius (R) von der Profiloberfläche (26) zu einem Grund (28) des Feineinschnitts (12) zunimmt und die Basis des Feineinschnitts (12) eine durch einen Radius mit einem Unendlichkeitswert definierte Konfiguration aufweist.

2. Reifen nach Anspruch 1, wobei in einer vertikalen Ebene, über die Feineinschnittlänge, von einem Längenmittelpunkt (32) des Feineinschnitts (12) zu den jeweiligen Feineinschnitt-Endpunkten (18), die Konfiguration des Feineinschnitts (12) durch einen zunehmenden Radius (Y) definiert ist.

3. Reifen nach Anspruch 1 oder Anspruch 2, wobei der Feineinschnitt (12) einen radial inneren Teil (30) von mindestens 10%, jedoch nicht mehr als die radial innersten 45% der Feineinschnitttiefe (D_{S}) aufweist und der radial innere Teil (30) eine durch einen Radius mit einem Unendlichkeitswert definierte Konfiguration aufweist.

4. Reifen nach mindestens einem der vorgenannten Ansprüche, wobei eine theoretische Linie (20) zwischen entgegengesetzten Feineinschnitt-Endpunkten (18) gezogen werden kann und die Linie (20) und der Feineinschnittgrund (28) sich in der gleichen vertikalen Ebene befinden.

5. Reifen nach mindestens einem der vorgenannten Ansprüche, wobei das Profilelement (26) entgegengesetzte Kanten (14, 16) aufweist und der mindestens eine Feineinschnitt-Endpunkt mit einer der entgegengesetzten Profilelementkanten zusammenfällt.

6. Lamelle zur Montage in einem Reifenformwerkzeug zum Formen eines Feineinschnitts in einer Reifenlauffläche, wobei die Lamelle entgegengesetzte Endpunkte, eine zwischen den entgegengesetzten Endpunkten gemessene Länge und eine Tiefe aufweist, wobei die Lamelle **dadurch gekennzeichnet ist, dass**:
in einer Vielzahl von Ebenen senkrecht zur Lamellentiefe, die Konfiguration eines radial äußeren Teils der Lamelle durch eine kontinuierliche nichtlineare Krümmung definiert ist, wobei die Krümmung mindestens einen Radius (R) hat, wobei der Wert des Radius von einer Oberseite der Lamelle zu einer Basis der Lamelle zunimmt, wobei die Lamellenbasis eine durch einen Radius mit einem Unendlichkeitswert definierte Konfiguration aufweist.

7. Formwerkzeuglamelle nach Anspruch 6, wobei in einer vertikalen Ebene, über die Lamellenlänge, von einem Längenmittelpunkt der Lamelle zu den jeweiligen Lamellenendpunkten, die Lamellenkonfiguration durch einen zunehmenden Radius definiert ist.

8. Formwerkzeuglamelle nach entweder Anspruch 6 oder 7, wobei mindestens 10%, jedoch nicht mehr als 45% eines untersten Teils der Lamelle einen Unendlichkeitsradius haben.

9. Formwerkzeuglamelle nach mindestens einem der vorgenannten Ansprüche, wobei eine theoretische Linie zwischen entgegengesetzten Lamellenendpunkten gezogen werden kann und die Linie und die Lamellenbasis in der gleichen vertikalen Ebene liegen.

10. Formwerkzeuglamelle nach mindestens einem der vorgenannten Ansprüche, wobei die Lamelle an den Lamellenendpunkten, gesehen in einer Ebene parallel zur Tiefe der Lamelle, eine geradlinige Konfiguration hat.

## Revendications

1. Bandage pneumatique possédant une bande de roulement de bandage pneumatique, la bande de roulement possédant une surface de bande de roulement (26) et plusieurs éléments de bande de roulement (10) entrant en contact avec le sol, au moins un des éléments possédant une lamelle (12), lamelle possédant des extrémités opposées (18), une longueur de lamelle telle qu'on la mesure entre les extrémités opposées, et une profondeur radiale (D_{S}), le bandage pneumatique étant **caractérisé par le fait que**,
dans plusieurs plans parallèles à la surface de bande de roulement (26), la configuration d'une portion externe en direction radiale de la lamelle (12) est définie par une courbure non linéaire continue, la courbure possédant au moins un rayon (R), la valeur dudit rayon (R) augmentant depuis la surface de bande de roulement (26) jusqu'à une base (28) de la lamelle (12), et la base de la lamelle (12) possédant une configuration définie par un rayon possédant une valeur d'infini.

2. Bandage pneumatique selon la revendication 1, dans lequel, dans un plan vertical, sur la longueur de la lamelle, depuis le centre (32) de la longueur de la lamelle (12) jusqu'aux extrémités respectives (18) de la lamelle, la configuration de la lamelle (12) est définie par un rayon croissant (Y).

3. Bandage pneumatique selon la revendication 1 ou 2, dans lequel, la lamelle (12) possède une portion interne en direction radiale (30) qui représente au moins 10 %, mais pas plus de 45 %, en position la plus interne en direction radiale, de la profondeur de lamelle (D_{S}), et la portion interne en direction radiale (30) possède une configuration définie par un rayon possédant une valeur d'infini.

4. Bandage pneumatique selon au moins une des revendications précédentes, dans lequel on peut tracer une ligne théorique (20) entre les extrémités opposées de lamelle (18), la ligne (20) et la base de lamelle (28) se trouvant dans le même plan vertical.

5. Bandage pneumatique selon au moins une des revendications précédentes, dans lequel l'élément de bande de roulement (26) possède des bords opposés (14, 16), et ladite au moins une extrémité de lamelle coïncide avec un des bords opposés de l'élément de bande de roulement.

6. Lame à monter à l'intérieur d'un moule pour bandage pneumatique pour former une lamelle dans une bande de roulement de bandage pneumatique, la lame possédant des extrémités opposées, une longueur telle qu'on la mesure entre les extrémités opposées et une profondeur, la lame étant **caractérisée par le fait que**
dans plusieurs plans perpendiculaires à la profondeur de la lame, la configuration d'une portion externe en direction radiale de la lame est définie par une courbure non linéaire continue, la courbure possédant au moins un rayon (R), la valeur dudit rayon (R) augmentant depuis un sommet de la lame jusqu'à une base de la lame, la base de la lame possédant une configuration définie par un rayon possédant une valeur d'infini.

7. Lame de moule selon la revendication 6, dans laquelle, dans un plan vertical, sur la longueur de la lame, depuis le centre de la longueur de la lame jusqu'aux extrémités respectives de la lame, la configuration de la lame est définie par un rayon croissant.

8. Lame de moule selon la revendication 6 ou 7, dans laquelle au moins 10 %, mais pas plus de 45 % d'une portion la plus basse de la lame possède un rayon d'infini.

9. Lame de moule selon au moins une des revendications précédentes, dans laquelle on peut tracer une ligne théorique entre les extrémités opposées de lame, la ligne et la base de lame se trouvant dans le même plan vertical.

10. Lame de moule selon au moins une des revendications précédentes, dans laquelle, aux extrémités de la lame, la lame possède une configuration en forme de ligne droite, lorsqu'on regarde dans un plan parallèle à la profondeur de la lame.
